# EUROPEAN PATENT APPLICATION

(11) **EP 4 394 622 A1**
(43) Date of publication of application: **03.07.2024**
(21) Application number: 21959128.6
(22) Date of filing: 07.12.2021
(51) Int. Cl.: G06F 16/951

(54) **DATA QUERY METHOD, DATA SERVICE AND ELECTRONIC DEVICE**

(30) Priority: 30.09.2021 WO PCT/CN2021/122407
(71) Applicant: Siemens Aktiengesellschaft, 80333 München (DE)
(72) Inventor: GAO, Yongfeng, Beijing 100079 (CN); GAO, Liang, Beijing 100044 (CN)
(74) Representative: Isarpatent
(86) International application number: PCT/CN2021/136184
(87) International publication number: WO 2023/050568

(57) **Abstract**

Provided in the embodiments of the present application are a data query method, a data service and an electronic device, by means of which the efficiency of data querying can be effectively improved while reducing costs. The method comprises: a data service receiving first input information, wherein the first input information comprises an identifier of a target body; and the data service outputting target data on the basis of the identifier of the target body, wherein the target data comprises instance data of the target body and/or instance data of at least part of a body that has a connection relationship with the target body, and the instance data of the target body and the instance data of the at least part of a body come from a plurality of systems.

## Description

### Technical field

The present application relates to the field of data query, in particular to a data query method, a data service and an electronic device.

### Background art

Over many years of informatization, enterprises of various kinds have established many information technology (IT) systems and operational technology (OT) systems. However, these IT systems and OT systems are isolated from each other, thus forming information islands.

Due to the existence of information islands, a user might encounter many difficulties when needing to query data in multiple systems, such as low query efficiency and high query costs.

Thus, the question of how to effectively improve data query efficiency when a user performs data query in systems is an issue that is in urgent need of a solution.

### Summary of the invention

The present application provides a data query method, a data service and an electronic device, which are able to effectively improve data query efficiency while reducing costs.

In a first aspect, a data query method is provided, comprising: a data service receiving first input information, the first input information comprising an identifier of a target ontology; the data service outputting target data on the basis of the identifier of the target ontology, the target data comprising instance data of the target ontology and/or instance data of at least a portion of ontologies having a connection relationship with the target ontology, wherein the instance data of the target ontology and the instance data of said at least a portion of ontologies come from multiple systems.

In the above technical solution, when needing to query data, a user only needs to input the identifier of the target ontology to the data service, and the user can thus acquire instance data of the target ontology and/or instance data of an ontology having a connection relationship with the target ontology; this avoids the problem of looking up all data-related interfaces in the system, thereby greatly reducing data query complexity and query time, and effectively improving data query efficiency. In addition, the target data outputted by the data service is instance data of the target ontology and/or instance data of an ontology having a connection relationship with the target ontology; that is to say, the data obtained by query by the user on the basis of the target ontology is, to a large extent, data of interest to the user, i.e. embodiments of the present application make the data acquired by the user more valuable.

Further, since the instance data of the target ontology and instance data of said at least a portion of ontologies come from multiple systems, data in multiple systems can be obtained by query by means of the data service in embodiments of the present application; this avoids the problem of querying the multiple systems one by one, further improving data query efficiency.

In some possible embodiments, the first input information further comprises at least one of the following parameters: an attribute of the target ontology; a connection relationship between the target ontology and a first ontology, the first ontology having a connection relationship with the target ontology, and said at least a portion of ontologies comprising the first ontology, wherein the target data comprises instance data of the target ontology and instance data of the first ontology.

In the above technical solution, the first input information comprises an attribute of the target ontology and/or a connection relationship between the target ontology and another ontology, the other ontology being an ontology associated with data which the user wishes to acquire; thus, all of the data outputted by the data service to the user is data of interest to the user, and the user experience can thus be improved.

In some possible embodiments, the method further comprises: the data service merging multiple knowledge graphs, to obtain a merged knowledge graph, the merged knowledge graph comprising the target ontology, said at least a portion of ontologies, and a connection relationship between the target ontology and said at least a portion of ontologies, wherein the merged knowledge graph further comprises access information of each ontology in the merged knowledge graph, the access information being used to indicate an original data service used for accessing each ontology before merging.

In the above technical solution, the data service can merge multiple knowledge graphs, such that data can be outputted for a user on the basis of the merged knowledge graph; in this way, information islands can be eliminated, and the user can use a single data service to obtain data of multiple data subject domain systems by querying. Thus, a data service of higher dimensionality is realized, and a higher-value data service is provided.

In some possible embodiments, the data service outputting target data on the basis of the identifier of the target ontology comprises: the data service determining an original data service used for accessing the target ontology, on the basis of the identifier of the target ontology and access information of the target ontology in the merged knowledge graph; the data service controlling the original data service used for accessing the target ontology to output the target data.

In the above technical solution, after multiple knowledge graphs have been merged, the data service can accurately determine the original data service accessing the target ontology on the basis of the access information for indicating the original data service accessing the target ontology, and cause the original data service to output target data; thus, the data obtained by querying by the user can be more accurate.

In some possible embodiments, the data service comprises a self-describing interface, for indicating a data service type provided by the data service.

In the above technical solution, the data service comprises a self-describing interface for indicating the data service type provided thereby, so the user can use the data service selectively according to a data query demand and self-describing information of the data service; this effectively improves the data query efficiency.

In some possible embodiments, the data service comprises a data query interface, which is a semantic interface;
the data service receiving first input information comprises: the data service receiving the first input information via the data query interface;
the data service outputting target data on the basis of the identifier of the target ontology comprises:
   the data service outputting the target data via the data query interface on the basis of the identifier of the target ontology.

In the above technical solution, the data query interface is configured as a semantic interface. The semantic interface may provide a complete set of easy-to-understand API data descriptions, enabling users to precisely query the data they need, without the need to realize further code, making API interface development simpler and more efficient. In addition, if the user queries different data in the data service, it is only necessary to amend the input information inputted to the data service, with no need to establish an interface for data query on each occasion that data query is performed; this helps to reduce the cost of data query.

In some possible embodiments, the data service outputting target data on the basis of the identifier of the target ontology comprises: the data service outputting the target data on the basis of the identifier of the target ontology and on the basis of a mapping relationship between an ontology and instance data, the mapping relationship between the ontology and instance data being determined according to an attribute of the ontology and an attribute of the instance data.

In a second aspect, a data service is provided, comprising units for performing the method in the first aspect above or the embodiments thereof.

In a third aspect, an electronic device is provided, comprising: a memory for storing a program; a processor for executing the program stored in the memory, the processor being used to perform the method in the first aspect above or the embodiments thereof when the program stored in the memory is executed.

In a fourth aspect, a computer readable storage medium is provided, which stores program code for device execution, the program code comprising instructions for performing steps in the method in the first aspect above or the embodiments thereof.

### Brief description of the drawings

Fig. 1 is a schematic diagram of the data query method in an embodiment of the present application.
Fig. 2 is a schematic diagram of a KG in an embodiment of the present application.
Fig. 3 is a schematic diagram of a KGA accessed by a data service A in an embodiment of the present application.
Fig. 4 is a schematic diagram of a KGB accessed by a data service B in an embodiment of the present application.
Fig. 5 is a schematic diagram of a KGC obtained by merging the KGA shown in Fig. 3 with the KGB shown in Fig. 4 in an embodiment of the present application.
Fig. 6 is a schematic diagram of a data service in an embodiment of the present application.
Fig. 7 is a schematic diagram of an electronic device in an embodiment of the present application.

Key to the drawings:
100 - data query method in embodiments of the present application;
110 - data service receiving first input information;
120 - data service outputting target data on basis of identifier of target ontology;
M - material;
P - worker;
700 - data service;
610 - communication unit;
620 - output unit;
700 - electronic device;
701 - memory;
702 - processor;
703 - communication interface;
1004 - bus.

### Detailed description of the invention

The technical solution in embodiments of the present application is described below with reference to the drawings. It should be understood that the specific examples herein are merely intended to help those skilled in the art to better understand embodiments of the present application, without limiting the scope of embodiments of the present application.

It should be understood that in various embodiments of the present application, the size of the sequence number of each process does not indicate an order of execution; the order of execution of each process should be determined according to the function and internal logic thereof, and should not constitute any limitation of the process of implementing embodiments of the present application.

It should also be understood the various embodiments described herein may be implemented separately or in combination, and embodiments of the present application impose no limitations in this respect.

Unless otherwise stated, all technical and scientific terms used in embodiments of the present application have the same meanings as those commonly understood by those skilled in the art. The terms used in the present application are merely intended to describe specific embodiments, not to limit the scope of the present application.

Over many years of informatization, enterprises of various kinds have established all sorts of different systems, such as IT systems and OT systems. However, these systems might be isolated from each other, thus forming information islands. This being the case, when a user needs to query certain data, the existence of information islands might make the task of performing data query very difficult for the user.

For example, a digital factory contains a financial system and a distributor management system, the financial system comprising customer information, contract information and asset information, etc., and the distributor management system comprising contract information and inventory information, etc., wherein the financial system and the distributor management system are isolated from each other.

When a user needs to look up contract-related customer information and inventory information, the user is required to look up all contract-related interfaces in the financial system and distributor management system, due to the fact that contract-related information is distributed in two systems, i.e. customer information is in the financial system, and inventory information is in the distributor management system; and the user must find all of the contract-related interfaces in order to acquire the contract-related information. Clearly, this is a very complex and arduous process, with low query efficiency and high query costs.

On this basis, embodiments of the present application propose a data query method that can effectively improve data query efficiency while reducing costs.

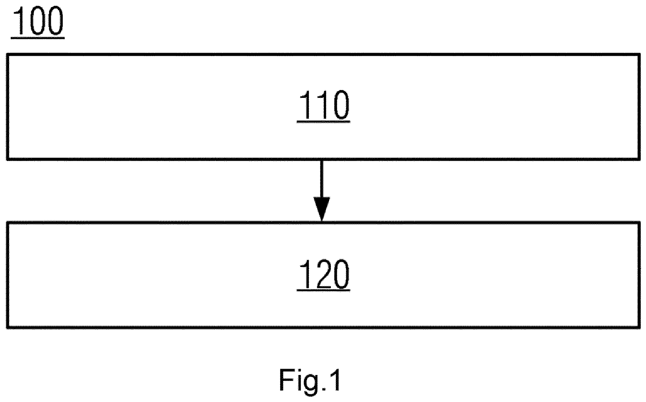

Fig. 1 shows a schematic flow chart of a data query method 100 in an embodiment of the present application. As shown in Fig. 1, the method 100 may comprise at least some of the following content.

In step 110, a data service receives first input information, the first input information comprising an identifier of a target ontology.

In step 120, the data service outputs target data on the basis of the identifier of the target ontology, the target data comprising instance data of the target ontology and/or instance data of at least a portion of ontologies having a connection relationship with the target ontology, wherein the instance data of the target ontology and the instance data of said at least a portion of ontologies come from multiple systems.

In embodiments of the present application, when needing to query data, a user only needs to input the identifier of the target ontology to the data service, and the user can thus acquire instance data of the target ontology and/or instance data of an ontology having a connection relationship with the target ontology; this avoids the problem of looking up all data-related interfaces in the system, thereby greatly reducing data query complexity and query time, and effectively improving data query efficiency. In addition, the target data outputted by the data service is instance data of the target ontology and/or instance data of an ontology having a connection relationship with the target ontology; that is to say, the data obtained by query by the user on the basis of the target ontology is, to a large extent, data of interest to the user, i.e. embodiments of the present application make the data acquired by the user more valuable.

Further, since the instance data of the target ontology and instance data of said at least a portion of ontologies come from multiple systems, target data in at least one system can be obtained by query by means of the data service in embodiments of the present application; this avoids the problem of querying the multiple systems one by one, further improving data query efficiency.

It must be explained that when the data service in embodiments of the present application is applied to an entire system, the data service may be understood as a node in the system.

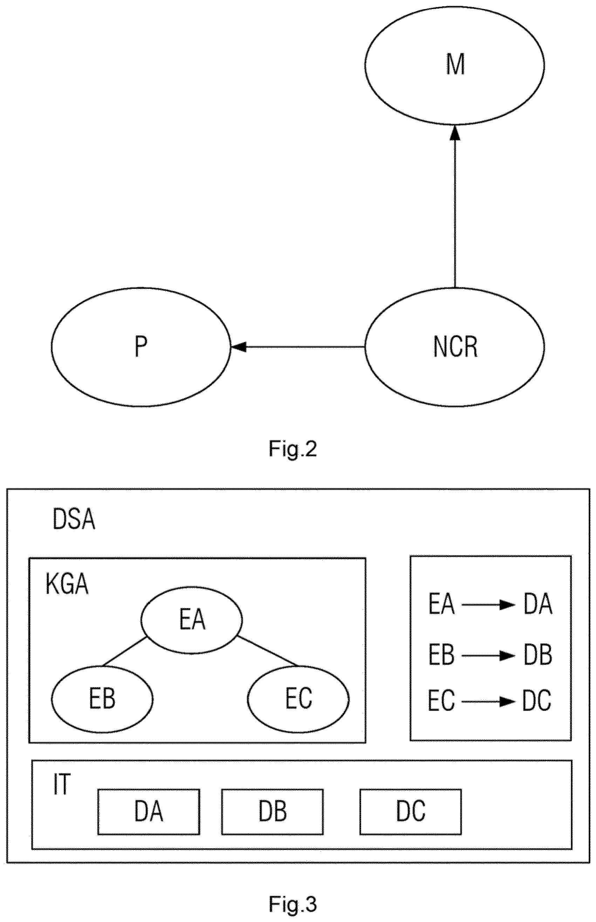

Regarding the ontology, the ontology may be a semantic data model, used for defining types of physical objects in a domain, and may be used to describe their attributes. The ontology may be understood as a data model in a broad sense; this means that the ontology only models a general type of an object having certain attributes, and does not contain information of specific individuals in a domain. Referring to Fig. 2, Fig. 2 comprises 3 ontologies, which are respectively a non-conformity report (NCR), material and worker.

Optionally, the ontology in embodiments of the present application may be established on the basis of an existing standard, i.e. the ontology is a standardized ontology. For example, the ontology may be established on the basis of the ISA95 standard.

The ontology is a standardized ontology, so when using the data service to perform data query, a user does not need to consider questions such as whether multiple systems queried by means of the data service are the same, and the user can use the data service in different scenarios.

Optionally, the ontology in embodiments of the present application may be defined by a knowledge graph (KG). The KG may essentially be a knowledge base called a semantic network, i.e. a knowledge base with a directed graph structure. Fig. 2 is a KG; the ontologies are nodes of the KG, and the edges in Fig. 2 represent various semantic relationships between the ontologies, e.g. a connection relationship between two ontologies. By means of the KG shown in Fig. 2, if a quality flaw occurs in a product in a factory, the material used when producing the product and the worker who produced the product can be determined via the KG.

The data service can access the KG, and the KG defines multiple ontologies. Since the ontologies are standardized ontologies, the data service in embodiments of the present application is also a standardized data service. That is, the data service in embodiments of the present application realizes standardization by means of the ontologies.

Optionally, the instance data of the ontology may come from at least one system. As an example, the at least one system may be, but is not limited to being, the IT system or OT system mentioned above, such as an enterprise resource planning (ERP) system, a manufacturing execution system (MES) or a supervisory control and data acquisition (SCADA) system, etc.

Optionally, the at least one system may be a heterogeneous system.

In addition to being able to output target data on the basis of an identifier of a target ontology, the data service can further output target data on the basis of a mapping relationship between an ontology and instance data. In other words, the data service can output target data on the basis of an identifier of a target ontology, and on the basis of a mapping relationship between an ontology and instance data.

Optionally, the mapping relationship between an ontology and instance data may be determined according to an attribute of the ontology and an attribute of the instance data.

Supposing that the ontology is a house, attributes of the ontology may for example be parameters such as the size of the house, the area of the house, the location of the house, and the shape of the house.

As an example, the mapping relationship between an ontology and instance data may be determined artificially by a developer. Alternatively, the mapping relationship between an ontology and instance data may be determined by a developer using artificial intelligence (AI). Using AI to determine the mapping relationship between an ontology and instance data can considerably improve the working efficiency of the developer.

Demonstratively, the mapping relationship between an ontology and instance data may be realized by a service engine module in the data service. Of course, it could also be realized by another module; embodiments of the present application impose no specific limitations in this respect.

Fig. 3 shows a schematic diagram of mapping relationships between instance data in a system and ontologies in a KGA accessed by a data service A. It must be explained that the KGA and mapping relationships are included in the data service A in Fig. 3, but this does not mean that the data service A comprises the KGA and mapping relationships; the intention is merely to show that the data service A can access the KGA and the mapping relationships.

It can be seen from Fig. 3 that the KGA comprises three ontologies, specifically ontology EA, ontology EB and ontology EC; ontology EA and ontology EB have a connection relationship, and ontology EA and ontology EC have a connection relationship. The IT system comprises 3 groups of instance data, specifically instance data DA, instance data DB and instance data DC. Ontology EA is mapped to instance data DA, ontology EB is mapped to instance data DB, and ontology EC is mapped to instance data DC.

Based on the data service shown in Fig. 3, when the user needs to query ontology EA, i.e. the target ontology is ontology EA, the user inputs ontology EA to the data service A, and then the data service A can output instance data of ontology EA, i.e. instance data DA to the user; alternatively, in addition to outputting instance data DA, the data service may also output instance data of ontologies EB and EC which have connection relationships with ontology EA, i.e. instance data DB and instance data DC.

Alternatively, the first input information may also comprise an attribute of the target ontology and/or a connection relationship between the target ontology and a first ontology, wherein the first ontology has a connection relationship with the target ontology. In this case, the target data comprises instance data of the target ontology and instance data of the first ontology.

Again taking Fig. 3 as an example for illustration, the target ontology is ontology EA, and the user wishes to query instance data of ontology EA and also instance data of ontology EB; the user can input ontology EA and the connection relationship between ontology EA and ontology EB to the data service A, and the data service can then output instance data of ontology EA and instance data of ontology EB, i.e. instance data DA and instance data DB.

Alternatively, when the user needs to query instance data of ontology EB and instance data of ontology EC, it can be seen from Fig. 3 that there is no edge, i.e. no connection relationship, between ontology EB and ontology EC. Thus, the user can input ontology EB, ontology EC, the connection relationship between ontology EB and ontology EA, and the connection relationship between ontology EA and ontology EC, to the data service. The data service can then output instance data of ontology EB and instance data of ontology EC, i.e. instance data DB and instance data DC, to the user.

In the above technical solution, the first input information comprises an attribute of the target ontology and/or a connection relationship between the target ontology and another ontology, the other ontology being an ontology associated with data which the user wishes to acquire; thus, all of the data outputted by the data service to the user is data of interest to the user, and the user experience can thus be improved.

Of course, ontology EA, ontology EB and ontology EC in Fig. 3 can not only be mapped one-to-one to instance data DA, instance data DB and instance data DC, but can also have mapping relationships with multiple instance data. For example, ontology EA may also be mapped to instance data DB and instance data DC.

It should be understood that instance data in embodiments of the present application may also be called a data model, data table, data or another name.

Optionally, in embodiments of the present application, the data service may comprise a self-describing interface, which may be used to indicate a data service type provided by the data service.

As an example, data service types may be classified with reference to a manner of classification of data subject domains. For example, data service types may be divided into human resource (HR) data services, product data services, financial data services and device data services, etc.

In the above technical solution, the data service comprises a self-describing interface for indicating the data service type provided thereby, so the user can use the data service selectively according to a data query demand and self-describing information of the data service; this effectively improves the data query efficiency.

In addition to a self-describing interface, the data service may also comprise an ontology query interface. The ontology query interface may be used to indicate instance data of an ontology. For example, the data service type provided by the data service is an HR data service; by means of the ontology query interface, the user can determine the HR data service and specifically can query company data, salary data, staff data, etc.

Further, the data service may also comprise a data query interface. In this case, step 110 may specifically be: the data service receiving first input information via the data query interface; and step 120 may specifically be: the data service outputting target data via the data query interface on the basis of the identifier of the target ontology.

Optionally, the data query interface may be a semantic interface. For example, the data query interface may be a SPARQL grammar interface, or the data query interface may be a GraphQL grammar interface.

The semantic interface may provide a complete set of easy-to-understand application programming interface (API) data descriptions, enabling users to precisely query the data they need, without the need to realize further code, making API interface development simpler and more efficient. In addition, if the user queries different data in the data service, it is only necessary to amend the input information inputted to the data service, with no need to establish an interface for data query on each occasion that data query is performed; this helps to reduce the cost of data query.

In this case, the data query interface may comprise a single interface. The cost of developing an interface is high; therefore, compared with a scheme whereby an interface needs to be developed on each occasion that data query is performed, the cost of data query is greatly reduced when the data query interface comprises a single interface.

Fig. 3 is taken as an example for illustration. If the data query interface is a semantic interface, when the user needs to query ontology EA and ontology EB, it is possible to input ontology EA, ontology EB and the connection relationship between ontology EA and ontology EB into the data service A; and when the user needs to query ontology EA and ontology EC, it is possible to input ontology EA, ontology EC and the connection relationship between ontology EA and ontology EC into the data service A, with no need to change the data query interface.

Differently, if the data query interface is another type of interface, then when the user needs to query ontology EA and ontology EB, an interface needs to be developed, this interface being used to realize the function of querying ontology EA and ontology EB; and when the user needs to query ontology EA and ontology EC, another interface needs to be developed, this interface being used to realize the function of querying ontology EA and ontology EC.

Clearly, if the data query interface is a semantic interface, the data service A only needs one data query interface to achieve the objective of querying all data.

Alternatively, the data query interface may be an interface other than a semantic interface.

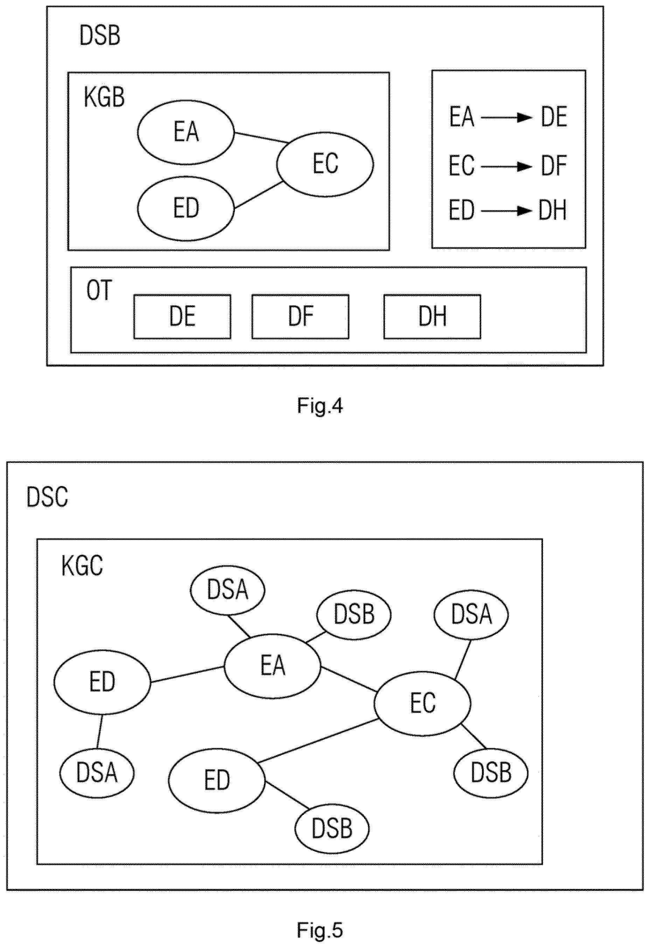

Optionally, different data services can access the same ontology. As shown in Figs. 3 and 4, the data service A shown in Fig. 3 can access the KGA comprising ontology EA, ontology EB and ontology EC, and the data service B shown in Fig. 4 can access a KGB comprising ontology EA, ontology EC and ontology ED. As can be seen, data service A and data service B are both able to access ontologies EA and EC.

For different KGs, the same ontology accessed by different data services may be mapped to the same instance data or different instance data. For example, ontology EA accessed by data service A in Fig. 3 is mapped to instance data DA of an IT system, and ontology EA accessed by data service B in Fig. 4 is mapped to instance data DE of an OT system. Clearly, for different data services, although the ontology is ontology EA in both cases, it is mapped to different instance data.

Optionally, in an embodiment of the present application, the method 100 may further comprise: a data service merging multiple KGs, to obtain a merged KG. The merged KG may comprise a target ontology, said at least a portion of ontologies mentioned in the above content, and a connection relationship between the target ontology and said at least a portion of ontologies.

The merged KG may comprise ontologies in multiple KGs and connection relationships among the ontologies. As shown in Figs. 3, 4 and 5, a data service can merge the KGA shown in Fig. 3 with the KGB shown in Fig. 4, to obtain a merged KGC which is shown in Fig. 5. The KGA comprises ontology EA, ontology EB and ontology EC, the KGB comprises ontology EA, ontology EC and ontology ED, and it can be seen from Fig. 5 that the merged KGC comprises ontology EA, ontology EB, ontology EC and ontology ED, and comprises connection relationships among ontology EA, ontology EB, ontology EC and ontology ED.

When merging multiple KGs, optionally, a data service may perform merging on the basis of a service mesh network and by means of a self-describing interface of a data service accessing each KG. Specifically, it is possible to determine, by means of a self-describing interface of a data service accessing each KG, whether a data service provided by this data service is a data service of interest to oneself, for example whether it is a data service that one needs, and it is thus possible to merge KGs accessed by multiple data services of interest, instead of merging the KGs accessed by all data services.

In the above technical solution, multiple KGs are merged; in this way, information islands can be eliminated, and a user can use a single data service to obtain data of multiple systems by querying. Thus, a data service of higher dimensionality is realized, and a higher-value data service is provided.

Consideration is given to the fact that different KGs may comprise the same ontology; for this reason, the merged KG may comprise not only ontologies and connection relationships among ontologies but also access information of each ontology in the merged KG, and this access information may be used to indicate a data service used to access the ontology before merging.

For convenience of description, a data service indicated by access information is called an original data service or standard data service. For example, the data services shown in Figs. 3 and 4 are both original data services; an original data service may be understood as a data service that only accesses ontologies of one data subject domain, e.g. the ontologies accessed by one original data service are all based on a company operating domain, which might include subjects such as analysis of the effectiveness of event publicity, and ontologies accessed by another original data service are all based on a manpower domain, which might include subjects such as the company staff situation. The data service that accesses the merged KG is called the merged data service, e.g. the data service shown in Fig. 5. The merged data service may be understood as a data service that is able to access ontologies of multiple data subject domains, e.g. the merged data service can access ontologies in the operating domain and manpower domain in the examples cited above.

In Fig. 5, in the case of ontology EA, DSA and DSB may be access information of ontology EA, wherein DSA indicates that original data service A is able to access ontology EA, and DSB indicates that original data service B is able to access ontology EA. In the case of ontology ED, DSB is access information of ontology ED, wherein DSB indicates that original data service B is able to access ontology ED.

Each ontology in the merged KG may comprise at least one new edge; a node (which may also be called an instance node) other than the ontology is linked by the at least one new edge and used to indicate an original data service capable of accessing the ontology. If at least two of multiple original data services are able to access the same ontology, then the ontology may comprise multiple new edges in the merged KG; if a particular ontology is accessed by only one original data service, then the ontology comprises a single new edge in the merged KG.

Continuing to refer to Fig. 5, data service A and data service B can both access ontology EA and ontology EC, so ontology EA and ontology EC in the merged KGC each comprise two new edges, each new edge linking two nodes, one of which is the ontology while the other is source information of the ontology. For example, in the case of ontology EA, the nodes linked by one of the two new edges are ontology EA and DSA, wherein DSA is source information of ontology EA.

Ontology EB is only accessed by data service A, and ontology ED is only accessed by data service B; thus, ontology EB and ontology ED each only comprise one new edge.

When a data service is a merged data service, the data service can output target data on the basis of the identifier of the target ontology and access information of the target ontology.

Specifically, the merged data service can determine an original data service accessing the target ontology, on the basis of access information of the target ontology, and then the merged data service can control the original data service to output target data.

The case where the target ontology is EA in Fig. 5 is taken as an example for illustration. After the merged data service C receives the identifier of EA inputted by the user, the merged data service C determines that data service A and data service B can both access ontology EA, according to the source information of ontology EA in the merged KGC, and therefore, the merged data service C controls data service A to output instance data DA of ontology EA, and controls data service B to output instance data DE of ontology EA; thus, the target data is instance data DA and instance data DE.

In the above technical solution, after multiple KGs have been merged, the merged data service can accurately determine the original data service accessing the target ontology on the basis of the access information indicating the original data service accessing the target ontology, and cause the original data service to output target data; thus, the data obtained by querying by the user can be more accurate.

Before merging multiple KGs, optionally, multiple original data services may further be subjected to microservice governance, so that mutual discovery is possible among the multiple original data services.

The microservice governance may mainly comprise: service discovery, load balancing, flow limiting, fusion, timeout, retry and service tracking, etc.

Optionally, a network framework of microservices may be a service mesh network. Due to the use of a service mesh, multiple data services can form a decentralized data service query network. In this case, even if a particular data service cannot be used, other data services will not be affected, so the usability of data services can be improved.

Method embodiments of the present application have been described in detail above; apparatus embodiments of the present application are described below. The apparatus embodiments are linked to the method embodiments; therefore, for parts not described in detail, reference can be made to the method embodiments above. The apparatus is able to realize any possible manner of implementation in the method above.

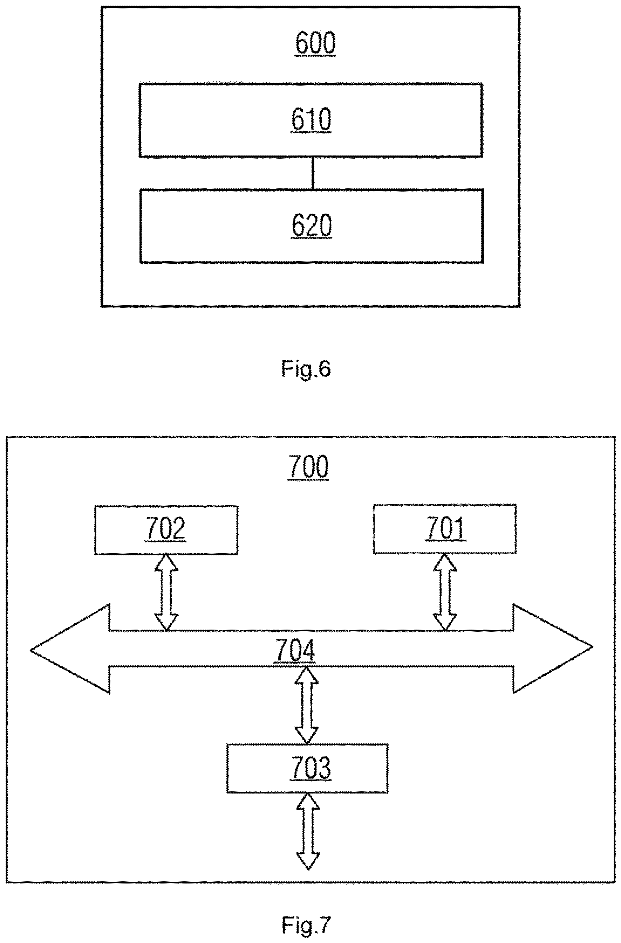

Fig. 6 shows a schematic block diagram of a data service 600 in an embodiment of the present application. The data service 600 can perform the data query method 100 in embodiments of the present application above, and the data service 600 may be a data service in the method described above.

As shown in Fig. 6, the data service 600 comprises:
a communication unit 610, for receiving first input information, the first input information comprising an identifier of a target ontology;
an output unit 620, for outputting target data on the basis of the identifier of the target ontology, the target data comprising instance data of the target ontology and/or instance data of at least a portion of ontologies having a connection relationship with the target ontology, wherein the instance data of the target ontology and the instance data of said at least a portion of ontologies come from multiple systems.

Optionally, in an embodiment of the present application, the first input information further comprises at least one of the following parameters: an attribute of the target ontology; a connection relationship between the target ontology and a first ontology, the first ontology having a connection relationship with the target ontology, and said at least a portion of ontologies comprising the first ontology, wherein the target data comprises instance data of the target ontology and instance data of the first ontology.

Optionally, in an embodiment of the present application, the data service further comprises a merging unit, for merging multiple knowledge graphs to obtain a merged knowledge graph, the merged knowledge graph comprising the target ontology, said at least a portion of ontologies, and a connection relationship between the target ontology and said at least a portion of ontologies, wherein the merged knowledge graph further comprises access information of each ontology in the merged knowledge graph, the access information being used to indicate an original data service used for accessing each ontology before merging.

Optionally, in an embodiment of the present application, the output unit 620 may specifically be used for: determining an original data service used for accessing the target ontology, on the basis of the identifier of the target ontology and access information of the target ontology in the merged knowledge graph; and controlling the original data service used for accessing the target ontology to output target data.

Optionally, in an embodiment of the present application, the data service comprises a self-describing interface, for indicating a data service type provided by the data service.

Optionally, in an embodiment of the present application, the data service comprises a data query interface, which is a semantic interface;
the communication unit 610 is specifically used for receiving the first input information via the data query interface;
the output unit 620 is specifically used for outputting the target data via the data query interface on the basis of the first input information.

Optionally, in an embodiment of the present application, the output unit 620 is specifically used for outputting the target data on the basis of the identifier of the target ontology and on the basis of a mapping relationship between an ontology and instance data, the mapping relationship between the ontology and instance data being determined according to an attribute of the ontology and an attribute of the instance data.

Fig. 7 is a schematic diagram of the hardware structure of an electronic device in an embodiment of the present application. The electronic device 700 shown in Fig. 7 comprises a memory 701, a processor 702, a communication interface 703 and a bus 704. The memory 701, processor 702 and communication interface 703 are communicatively connected to each other via the bus 704.

The memory 701 may be a read-only memory (ROM), a static storage device and a random access memory (RAM). The memory 701 may store a program, and when the program stored in the memory 701 is executed by the processor 702, the processor 702 and the communication interface 703 are used to perform the steps of the data query method in an embodiment of the present application. Optionally, the program stored in the memory 701 may be a data service mentioned above.

The processor 702 may use a general-purpose central processing unit (CPU), a microprocessor, an application specific integrated circuit (ASIC), a graphics processing unit (GPU) or one or more integrated circuits, for executing the relevant program, so as to realize the functions required to be performed by the units in the data service in an embodiment of the present application, or perform the data query method in an embodiment of the present application.

The processor 702 may also be an integrated circuit chip, having signal processing capability. In the process of implementation, the steps of the data query method in an embodiment of the present application may be performed by means of instructions in the form of software or an integrated logic circuit of hardware in the processor 1002.

The processor 702 may also be a general-purpose processor, a digital signal processor (DSP), an ASIC, a field programmable gate array (FPGA) or another programmable logic device, discrete gate or transistor logic device/discrete hardware component. It is able to realize or execute each method, step and logic block diagram disclosed in embodiments of the present application. The general-purpose processor may be a microprocessor or any conventional processor, etc. The steps of the method disclosed in conjunction with embodiments of the present application may be performed to completion with a processor directly embodied as hardware, or performed to completion using a combination of software modules and hardware in a processor. The software modules may be located in a mature storage medium in the art, such as random memory, flash memory, read only memory, programmable read only memory or electrically erasable programmable memory/registers. The storage medium is located in the memory 701, and the processor 1002 reads information in the memory 701, and in conjunction with hardware thereof, performs the functions required to be performed by the units comprised in the apparatus in an embodiment of the present application, or performs the data query method in an embodiment of the present application.

The communication interface 703 uses a transceiving means, for example but not limited to the transceiver type, to realize communication between the electronic device 700 and another device or communication network. For example, the electronic device 700 may receive first input information via the communication interface 703.

The bus 704 may comprise a pathway for transmitting information among the components (e.g. the memory 701, processor 702 and communication interface 703) of the electronic device 700.

It should be noted that although the electronic device 700 only shows the memory, processor and communication interface, in the process of specific implementation the electronic device 700 may also comprise other devices necessary for realizing normal operation, as those skilled in the art will understand.

Moreover, depending on specific needs, the electronic device 700 may also comprise hardware devices for realizing other additional functions, as those skilled in the art will understand. In addition, those skilled in the art will understand that the electronic device 700 may only comprise the devices that are necessary for realizing embodiments of the present application, and need not comprise all of the devices shown in Fig. 7.

Embodiments of the present application further provide a computer readable storage medium, storing program code for device execution, the program code comprising instructions for performing steps in the data query method described above.

Embodiments of the present application further provide a computer program product, comprising a computer program stored on a computer readable storage medium, the computer program comprising program instructions which, when executed by a computer, cause the computer to perform the data query method described above.

The computer readable storage medium may be a transient computer readable storage medium or a non-transient computer readable storage medium.

Those skilled in the art will understand clearly that, for convenience and conciseness of description, the specific operating process of the apparatus described above may refer to the related process in the method embodiments above, so is not described again here.

In some embodiments provided in the present application, it should be understood that the disclosed apparatus and method may be realized in other ways. For example, the apparatus embodiments described above are merely schematic, e.g. the division of the units is merely a division of logic functions, and there may be other ways of dividing in actual implementation, e.g. multiple units or components may be combined or may be integrated in another system, or some features may be ignored, or not implemented. Furthermore, the mutual coupling or direct coupling or communicative connection shown or discussed may be indirect coupling or communicative connection via some interfaces, apparatuses or units, and may be electrical, mechanical or in another form.

The wording used in the present application is merely used to describe embodiments, not to limit the claims. As used in the description of claims and embodiments, unless clearly indicated in the context, "a" and "the" in the singular form are intended to likewise include the plural form. Similarly, as used in the present application, the term "and/or" means including any and all possible combinations of one or more of the relevant listed items. Furthermore, when used in the present application, the term "comprises" means the existence of the stated features, entities, steps, operations, elements and/or components, but does not rule out the existence or addition of one or more other features, entities, steps, operations, elements, components and/or subgroups of these.

The aspects, manners of implementation, implementations or features in the described embodiments may be used alone or in any combination. The aspects in the described embodiments may be realized by software, hardware, or a combination of software and hardware. The described embodiments may also be embodied by a computer readable medium storing computer readable code, the computer readable code comprising instructions that may be executed by at least one computing apparatus. The computer readable medium may be associated with any data storage apparatus capable of storing data, the data being readable by a computer system. Examples of computer readable media may include read-only memory, random access memory, compact disc read-only memory (CD-ROM), hard disk drive (HDD), digital video disc (DVD), magnetic tape and optical data storage apparatuses, etc. The computer readable medium may also be distributed in a computer system connected via a network, in which case the computer readable code may be stored and executed in a distributed manner.

The technical description above may refer to the accompanying drawings, which form part of the present application, and manners of implementation based on the described embodiments are shown in the drawings by means of description. Although these embodiments are described in sufficient detail to enable a person skilled in the art to realize them, they are non-limiting; thus, other embodiments may be used, and changes may be made without departing from the scope of the described embodiments. For example, the order of operations described in the flow chart is non-limiting; thus, the order of two or more operations expounded in the flow chart and described according to the flow chart may be changed according to some embodiments. As another example, in some embodiments, one or more operation expounded in the flow chart and described according to the flow chart is optional, or may be deleted. In addition, some steps or functions may be added to the disclosed embodiments, or the order of two or more steps is switched. All of these changes are considered to be included in the disclosed embodiments and claims.

Furthermore, terms are used in the above technical descriptions to provide a thorough understanding of the described embodiments. However, over-fine details are not needed to realize the described embodiments. Thus, the above description of embodiments is presented for the purpose of expounding and describing. The embodiments presented in the above description and the examples disclosed according to these embodiments are provided individually, to add context and aid understanding of the described embodiments. The Description above is not intended to be omission-free or to limit the described embodiments to the precise form of the present application. Based on the teaching above, some amendments, optional applications and changes are feasible. In some cases, familiar processing steps have not been described in detail, in order to avoid affecting the described embodiments unnecessarily.

The above are merely particular ways of implementing embodiments of the present application, but the scope of protection of embodiments of the present application is not limited to this. All changes or substitutions that any person skilled in the art could easily think of within the technical scope disclosed in embodiments of the present application should be included in the scope of protection of embodiments of the present application. Thus, the scope of protection of embodiments of the present application shall be the scope of protection of the claims.

## Claims

1. A data query method, **characterized by** comprising:
a data service receiving (110) first input information, the first input information comprising an identifier of a target ontology;
the data service outputting (120) target data on the basis of the identifier of the target ontology, the target data comprising instance data of the target ontology and/or instance data of at least a portion of ontologies having a connection relationship with the target ontology, wherein the instance data of the target ontology and the instance data of said at least a portion of ontologies come from multiple systems.

2. The method as claimed in claim 1, **characterized in that** the first input information further comprises at least one of the following parameters:
an attribute of the target ontology;
a connection relationship between the target ontology and a first ontology, the first ontology having a connection relationship with the target ontology, and said at least a portion of ontologies comprising the first ontology,
wherein the target data comprises instance data of the target ontology and instance data of the first ontology.

3. The method as claimed in claim 1 or 2, **characterized in that** the method further comprises:
the data service merging multiple knowledge graphs, to obtain a merged knowledge graph, the merged knowledge graph comprising the target ontology, said at least a portion of ontologies, and a connection relationship between the target ontology and said at least a portion of ontologies,
wherein the merged knowledge graph further comprises access information of each ontology in the merged knowledge graph, the access information being used to indicate an original data service used for accessing each ontology before merging.

4. The method as claimed in claim 3, **characterized in that** the data service outputting (120) target data on the basis of the identifier of the target ontology comprises:
the data service determining an original data service used for accessing the target ontology, on the basis of the identifier of the target ontology and access information of the target ontology in the merged knowledge graph;
the data service controlling the original data service used for accessing the target ontology to output (120) the target data.

5. The method as claimed in any one of claims 1 - 4, **characterized in that** the data service comprises a self-describing interface, for indicating a data service type provided by the data service.

6. The method as claimed in any one of claims 1 - 5, **characterized in that** the data service comprises a data query interface, which is a semantic interface;
the data service receiving (110) first input information comprises:
the data service receiving (110) the first input information via the data query interface;
the data service outputting (120) target data on the basis of the identifier of the target ontology comprises:
the data service outputting (120) the target data via the data query interface on the basis of the identifier of the target ontology.

7. The method as claimed in any one of claims 1 - 6, **characterized in that** the data service outputting (120) target data on the basis of the identifier of the target ontology comprises:
the data service outputting (120) the target data on the basis of the identifier of the target ontology and on the basis of a mapping relationship between an ontology and instance data, the mapping relationship between the ontology and instance data being determined according to an attribute of the ontology and
an attribute of the instance data.

8. A data service (600), **characterized by** comprising:
a communication unit (610), for receiving first input information, the first input information comprising an identifier of a target ontology;
an output unit (620), for outputting target data on the basis of the identifier of the target ontology, the target data comprising instance data of the target ontology and/or instance data of at least a portion of ontologies having a connection relationship with the target ontology, wherein the instance data of the target ontology and the instance data of said at least a portion of ontologies come from multiple systems.

9. An electronic device (700), **characterized by** comprising:
a memory (701) for storing a program;
a processor (702) for executing the program stored in the memory (701), the processor (702) being used to perform the data query method as claimed in any one of claims 1 - 7 when the program stored in the memory (701) is executed.

10. A computer readable storage medium, **characterized in that** the computer readable medium stores program code for device execution, the program code comprising instructions for performing steps in the data query method as claimed in any one of claims 1 - 7.
